# EUROPÄISCHE PATENTSCHRIFT

(11) **EP 2 147 235 B1**
(45) Veröffentlichungstag und Bekanntmachung des Hinweises auf die Patenterteilung: **07.09.2011**
(21) Anmeldenummer: 08734986.6
(22) Anmeldetag: 03.04.2008
(51) Int. Cl.: F16H 57/04

(54) **ÖLFANGVORRICHTUNG, GETRIEBE UND VERFAHREN**
OIL TRAP DEVICE, GEARBOX, AND METHOD
DISPOSITIF COLLECTEUR D'HUILE, BOÎTE DE VITESSES ET PROCÉDÉ ASSOCIÉ

(30) Priorität: 13.04.2007 DE 102007017876
(43) Veröffentlichungstag der Anmeldung: 27.01.2010
(73) Patentinhaber: SEW-EURODRIVE GmbH & Co. KG, 76646 Bruchsal (DE)
(72) Erfinder: MEGERLE, Jürgen, 76694 Forst (DE); BÜHN, Oliver, 76703 Kraichtal (DE)
(74) Vertreter: Tüngler, Eberhard
(86) Internationale Anmeldenummer: PCT/EP2008/002645
(87) Internationale Veröffentlichungsnummer: WO 2008/125223

(56) Entgegenhaltungen:
- DE-A1- 4 132 780
- DE-A1-102005 010 322
- GB-A- 2 041 117

## Beschreibung

Die Erfindung betrifft eine Ölfangvorrichtung, ein Getriebe und ein Verfahren.

Aus der gattungsgemäßen DE 10 2005 010 322 A1 ist ein Ölschmiersystem für ein Getriebe eines Kraftfahrzeuges bekannt, bei welcher ein Ölübergabeelement bogenförmige Ablenkelemente aufweist, welche auf einer Grundplatte stehend angeordnet, wobei die Grundplatte mit ihrer von den Ablenkelementen abgewandten Seitenfläche flächig auf der Stirnöffnung einer Getriebewelle aufsitzt, wobei ein Stutzen in die Öffnung der Getriebewelle eingreift und wobei das Ölübergabeelement nach außen bis auf einen Einspritzkanal für Öl durch ein Topfelement abgeschirmt ist.

Aus der DE 4132780 A1 ist ein Stirnradgetriebe bekannt, bei welchem eine Ölsammelwanne vorgesehen ist, an welche ein Verteilerkanal angeschlossen ist. Die Ölsammelwanne weist hierbei eine Einlassöffnung auf, die an den Bereich eines Einlaufzwickels zweier miteinander kämmender Zahnräder herangeführt.

Aus der GB 2 041 117 A ist eine Schmierung einer Übersetzung bekannt, bei welcher ein fest mit dem Gehäuse verbundenes Versorgungselement in eine Zylinderbohrung einer sich drehenden Welle hineinragt.

Der Erfindung liegt die Aufgabe zugrunde, bei einem Getriebe die Standzeit zu erhöhen.

Erfindungsgemäß wird die Aufgabe bei der Ölfangvorrichtung nach den in Anspruch 1 angegebenen Merkmalen, bei dem Getriebe nach den In Anspruch 11 oder 12 angegebenen Merkmalen und bei dem Verfahren nach den in Anspruch 8 oder 9 angegebenen Merkmalen gelöst.

Wichtige Merkmale der Erfindung einer Ölfangvorrichtung sind in Anspruch 1 angegeben. Insbesondere sind ein Fangblech und ein Leitrohr vorgesehen, wobei ein erster Endbereich des Fangblechs in einem ersten Endbereich des Leitrohrs vorgesehen ist, insbesondere in einen ersten Endbereich des Leitrohrs greift. Von Vorteil ist dabei, dass Öl aus dem Getriebeinneren, Insbesondere von Zahnrädern weggeschleudertes Öl, aufnehmbar und in den Schmierkreislauf rückführbar ist. Somit ist die Schmierung des Getriebes verbessert, wodurch die Standzeit erhöht ist. Von Vorteil ist weiterhin, dass mit einem Fangblech eine große Oberfläche zum Fangen des Öls bereitgestellt ist, und dass Oberflächenspannungs-Effekte und die Schwerkraft die Führung des Öls in ein Schmieröl-Rohrsystem bewirken. Eine Ölpumpe ist somit verzichtbar, was die Störanfälligkeit des Getriebes vermindert und folglich wiederum die Standzeit des Getriebes erhöht. Weiter ist mit der Anordnung eines Endes des Fangblechs in einem Ende eines Leitrohrs ein einfacher, robuster Anschluss an das Schmieröl-Rohrsystem geschaffen, wobei das Schmieröl-Rohrsystem ganz oder teilweise in der Gehäusewand vorgesehen sein kann. Eine interne Verrohrung ist somit weitestgehend verzichtbar. Dies vermindert die Störanfälligkeit des Getriebes und erhöht somit dessen Standzeit. Von besonderem Vorteil ist, dass die Verbindung des Fangblechs mit dem Leitrohr zur Befestigung des Fangblechs am Getriebegehäuse verwendbar ist. Somit ist eine einfache Fertigung des Fangblechs mit Leitrohr und eine einfache Montage der Ölfangvorrichtung am Getriebegehäuse im Getriebeinneren vornehmbar.

Vorzugsweise ist die Ölfangvorrichtung zum Einleiten von Schmiermittel oder Schmleröl in eine Bohrung oder ein Rohr ausgebildet.

Bei einer vorteilhaften Ausgestaltung weist der erste Endbereich des Leitrohrs eine Öffnung auf, in welche der erste Endbereich des Fangblechs hineinragt, wobei Seitenflächen des Fangblechs von dem Rand der Öffnung beabstandet sind. Somit ist vorteilhaft eine Öffnung im Leitrohr ausgebildet, durch die Öl vom Fangblech in das Leitrohr leitbar ist. Die Beabstandung des Randes der Öffnung von den Seitenflächen des Fangblechs bewirkt vorteilhaft, dass Öl entlang der Seitenflächen In das Leltrohr hinein fließen kann. Somit sind Leitrinnen oder Leitkanäle verzichtbar, und.der Ölfluss wird durch Öberflächeneffekte zwischen Öl und Fangblech-Seitenflächen bewirkt. Vorzugsweise ist der Rand zu beiden Seitenflächen des Fangblechs beabstandet. Hierdurch sind beide Seitenflächen zur Führung des Ölflusses, insbesondere je nach Laufrichtung der Zahnräder, welche das Öl wegschleudern, einsetzbar.

Bei einer vorteilhaften Ausgestaltung ist die Öffnung zumindest teilweise bezüglich des ersten Endbereichs des Leitrohrs radial orientiert. Bei einer vorteilhaften Ausgestaltung ist die

Öffnung zumindest teilweise bezüglich des ersten Endbereichs des Leitrohrs axial orientiert. Somit sind unterschiedliche Verbindungsmöglichkeiten zwischen Fangblech und Leitrohr bereitgestellt, insbesondere unterschiedliche Anordnungen der Öl aufnehmenden Öffnungen des Leitrohrs.

Bei einer vorteilhaften Ausgestaltung ist das Fangblech in einem Teilbereich seines ersten Endbereichs gehalten, insbesondere fixiert, zumindest durch Verbindung des Fangblechs mit einem Teilbereich des ersten Endbereichs des Leitrohrs. Von Vorteil ist dabei, dass das Fangblech durch das Leitrohr gehalten wird. Somit ist eine Befestigung des Fangblechs an einer Halteschiene oder am Getriebegehäuse verzichtbar. Die Ölfangvorrichtung, bestehend aus Fangblech und Leitrohr, ist somit einfach montierbar. Vorteilhaft ist die Verbindung kraftschlüssig und/oder formschlüssig und/oder stoffschlüssig ausgeführt.

Bei einer vorteilhaften Ausgestaltung wird durch die Fixierung des Fangblechs ein Ende des Leitrohrs verschlossen. Somit ist eine Fertigung der Ölfangvorrichtung in wenigen Arbeitsschritten ausführbar.

Bei einer vorteilhaften Ausgestaltung ragt ein zweiter Endbereich des Fangblechs über das Leitrohr in axialer und/oder in radialer Richtung hinaus. Von Vorteil ist dabei, dass die Ölfangvorrichtung in montierter Position eine Fangfläche in Bereichen um die Zahnräder ausbildet. Somit ist weggeschleudertes Öl besonders effektiv aufnehmbar.

Bei einer vorteilhaften Ausgestaltung weist der erste Endbereich des Fangblechs eine Führungskante auf, die in etwa in einer durch die Öffnung festgelegten Richtung verläuft, und der zweite Endbereich des Fangblechs eine Unterkante, die in etwa in einem rechten Winkel zur Richtung der Führungskante verläuft. Eine Verbindungskante des Fangblechs verbindet die Unterkante mit der Führungskante, wobei die Führungskante mit der Verbindungskante und die Unterkante mit der Verbindungskante jeweils in einem Winkel aneinander stoßen, der größer als 90°, insbesondere größer als 135°, ist. Somit ist vorteilhaft der Ölfluss durch die Begrenzung der Seitenflächen des Fangblechs, also durch Kanten, bewirkbar. Die Winkel zwischen den Kantenabschnitten bewirken hierbei vorteilhafte Führungsverhältnisse für den Ölfluss.

Bei einer vorteilhaften Ausgestaltung weist der zweite Endbereich des Fangblechs Mittel zum Verbinden mit einem weiteren Fangblech auf. Somit ist vorteilhaft eine bogenförmige Ölfangvorrichtung bildbar, die wie eine Brücke Zahnräder im Getriebe überspannt und die daher weggeschleudertes Öl aus einem großen Bereich um das Zahnrad oder die Zahnräder herum aufnehmen kann.

Bei einer vorteilhaften Ausgestaltung weist der zweite Endbereich des Fangblechs eine Fangfläche auf, die in eine der Seitenflächen des Fangblechs mündet. Somit ist vorteilhaft ein Leiten des gefangenen Schmieröls in zwei Schmieröl-Rohrsysteme vorsehbar.

Bei einer vorteilhaften Ausgestaltung ist das Fangblech an der vom Teilbereich des ersten Endbereichs des Leitrohrs abgewandten Seite der Öffnung befestigt. Somit ist das Leitrohr an einer Seite durch die Befestigung verschlossen, und das aufgefangene Öl fließt in das Leitrohr und nicht am falschen Ende aus diesem heraus.

Bei einer vorteilhaften Ausgestaltung sind zwei Ölfangvorrichtungen nach mindestens einem der vorangegangenen Ansprüche vorgesehen, wobei die zweiten Endbereiche der jeweiligen Fangbleche verbunden oder als ein Stück ausgebildet sind. Somit ist eine Ölfangvorrichtung mit wenigen Arbeitsschritten bildbar, die zweiseitig befestigbar ist und die zwei Schmieröl-Rohrsysteme mit Öl versorgen kann.

Wichtige Merkmale der Erfindung eines Verfahrens zum Verbinden eines Blechs mit einem Rohr sind in Anspruch 8 angegeben. Insbesondere ist vorgesehen, dass in einem Endbereich des Rohrs ein Schnitt eingebracht wird, das Blech in den Schnitt eingeführt wird und das Blech mit dem Rohr verbunden wird, insbesondere stoffschlüssig und/oder kraftschlüssig und/oder formschlüssig. Somit ist eine Ölfangvorrichtung mit wenigen Arbeitsschritten aus preisgünstigen Materialien fertigbar. Von Vorteil ist dabei, dass eine aufwendige Verbindung verzichtbar ist. In einer Weiterbildung wird im Endbereich eine Öffnung ausgebildet, die sich trichterförmig zum Blech hin öffnet. Die Trichterform kann in zwei Raumrichtungen oder lediglich in einer Schnittebene ausgebildet sein. Von Vorteil ist dabei, dass Öl vom Blech in das Rohr aufnehmbar ist, wobei möglichst wenig Öl an den Seiten der Öffnung vorbei fließt.

Wichtige Merkmale der Erfindung eines alternativen Verfahrens zum Verbinden eines Blechs mit einem Rohr sind Gegenstand von Anspruch 9. Hierbei ist vorgesehen, dass
i. in einem Endbereich des Rohrs
   i.1 ein erster Schnitt in einer ersten Ebene, die transversal zur Achse des Endbereichs des Rohrs orientiert ist, eingebracht wird, wobei der Schnitt das Rohr bis zu einer Sekante aufschneidet,
   i.2 ein zweiter Schnitt in einer zweiten Ebene, die transversal zur Achse des Endbereichs des Rohrs orientiert ist, eingebracht wird, wobei der Schnitt das Rohr bis zu einer Sekante aufschneidet,
   i.3 ein dritter Schnitt in einer dritten Ebene eingebracht wird, die jeweils transversal zu der ersten Ebene und der zweiten Ebene orientiert ist, wobei der Schnitt am Ende des Rohrs beginnt und den ersten Schnitt und den zweiten Schnitt schneidet und somit in dem Endbereich in der Rohrwandung zwei jeweils durch die drei Schnitte begrenzte Zungen ausbildet,
ii. die Zungen in Umfangsrichtung aufgebogen werden,
iii. das Blech in den dritten Schnitt eingeführt wird,
iv. ein Teilbereich des Endbereichs verformt, insbesondere gequetscht, wird zur Verbindung des Blechs mit dem Rohr.

Bei einer vorteilhaften Ausgestaltung wird der Teilbereich des Endbereichs mit dem Blech stoffschlüssig verbunden. Somit ist ein besonders kostengünstiges Verfahren zur Fertigung einer Ölfangvorrichtung bereitgestellt, indem das Rohr als Leitrohr und das Blech als Fangblech vorgesehen wird. Insbesondere ist die Öffnung eine Leitrohrs zur Aufnahme von Öl einfach und mit geringem Aufwand fertigbar, wobei aus dem überbleibenden Material bei Ausbildung der Öffnung eine trichterförmige Mündung zur Aufnahme des Öls vom Fangblech gebildet wird. Insbesondere erfolgt außerdem der Abschluss des Leitrohrs vorteilhaft in einem Schritt mit dem Herstellen der Verbindung zwischen Fangblech und Leitrohr.

Wichtige Merkmale der Erfindung eines Getriebes sind in Anspruch 11 angegeben. Insbesondere kann vorgesehen sein, dass ein Gehäuse, ein Zahnrad und eine Ölfangvorrichtung umfasst sind, wobei die Ölfangvorrichtung eine Auffangfläche zur Aufnahme von vom Zahnrad weggeschleudertem Schmieröl aufweist, die sich bogenförmig teilweise um das Zahnrad erstreckt und in einem Leitrohr befestigt ist. Schmieröl ist von der Auffangfläche In das Leitrohr leitbar, und das Leitrohr ist in einer Bohrung des Getriebegehäuses befestigt, wobei Schmieröl von dem Leitrohr durch die Bohrung zur Versorgung eines Lagers leitbar ist. Von Vorteil ist dabei, dass ein robuster Schmiermittelkreislauf ausgebildet ist, für den eine Schmiermittelpumpe verzichtbar ist. Der Schmiermittelkreislauf ist somit weniger störanfällig, und die Standzeit des Getriebes ist erhöht.

Wichtige Merkmale der Erfindung eines Getriebes sind alternativ oder zusätzlich in Anspruch 12 beschrieben. Hierbei kann vorgesehen sein, dass ein Gehäuseteil, ein Zahnrad und eine Ölfangvorrichtung umfasst sind, wobei die Ölfangvorrichtung ein Fangblech und ein erstes Leitrohr umfasst, wobei das Fangblech eine Fangfläche aufweist, die transversal zur Umfangsrichtung des Zahnrades angeordnet ist, und ein erstes Ende des Fangblechs in ein erstes Ende des ersten Leitrohrs ragt, insbesondere greift, und ein zweites Ende des ersten Leitrohrs mit einem Gehäuseteil verbunden, insbesondere am Gehäuseteil befestigt, Ist. Von Vorteil ist dabei, dass die Ölfangvorrichtung in etwa, also vorzugsweise bis auf Abweichungen von 20°, besonders vorzugsweise bis auf Abweichungen von 10°, ganz besonders vorzugsweise bis auf Abweichungen von 5° oder weniger, entlang einer Welle eines Zahnrades ausrichtbar ist, wobei das Fangblech oder die Fangbleche der Ölfangvorrichtung von dem Zahnrad weggeschleudertes Öl aufnehmen und an Leitrohre weiterleiten. Somit sind besonders vorteilhaft die Lager der Welle über die Ölfangvorrichtung mit Öl versorgbar. Eine zusätzliche Versorgung der Lager aus einer Ölpumpe ist somit verzichtbar. Somit ist die Schmierung weniger störanfällig und die Standzeit des Getriebes erhöht. Die transversale Anordnung der Fangflächen bewirkt vorteilhaft günstige Verhältnisse beim Aufnehmen des weggeschleuderten Öls und bei beidseitiger Ausbildung der Fangflächen die Möglichkeit des Betriebs der Ölfangvorrichtung in beiden Drehrichtungen des Zahnrades.

Bei einer vorteilhaften Ausgestaltung ist die Ölfangvorrichtung in etwa parallel ausgerichtet zwischen zwei Wellen des Getriebes, und die beidseitig vorhandenen Leitrohre versorgen über ein Kanalsystem, vorzugsweise über eine Verzweigung in einer Nut eines Lagerdeckels, die Lager jeder der zwei Wellen.

Bei einer vorteilhaften Ausgestaltung ist ein zweites Leitrohr vorgesehen, wobei das Fangblech durch erstes Leitrohr und zweites Leitrohr gehalten ist. Somit sind vorteilhaft die Lager an beiden Enden einer Welle aus einer Ölfangvorrichtung versorgbar.

Bei einer vorteilhaften Ausgestaltung ist im Gehäuseteil eine Bohrung vorgesehen, in der das zweite Ende des ersten Leitrohrs eingeführt ist. Somit ist vorteilhaft ein Schmieröl-Rohrsystem in der Wandung des Getriebes ausbildbar. Von Vorteil ist, dass aufgefangenes Öl mittels der Ölfangvorrichtung in dieses Rohrsystem leitbar ist.

Bei einer vorteilhaften Ausgestaltung ist das erste Leitrohr in der Bohrung gehalten. Von Vorteil ist dabei, dass die Befestigung des Leitrohrs durch die für die Leitung des Öls ohnehin notwendige Anordnung des Leitrohr-Endes in der Bohrung bewirkt ist.

Bei einer vorteilhaften Ausgestaltung ist das zweite Ende des erste Leitrohrs in die Bohrung eingewalzt. Somit ist vorteilhaft ein einfaches Fertigungsverfahren zur Montage der Ölfangvorrichtung im Getriebe-Innenraum einsetzbar.

Bei einer vorteilhaften Ausgestaltung ist ein Lager, insbesondere zur Lagerung einer das Zahnrad tragenden Welle, vorgesehen, wobei durch die Bohrung das Lager mit Schmieröl versorgbar ist, insbesondere mit vom Zahnrad weggeschleudertem, durch das Fangblech aufgenommenem Öl. Von Vorteil ist dabei, dass ein robuster, kostengünstig ausführbarer Schmiermittelkreislauf bereitgestellt ist, der zudem im Vergleich mit einer Wellenpumpe den Wirkungsgrad des Getriebes im wesentlichen nicht vermindert.

Bei einer vorteilhaften Ausgestaltung verläuft die Bohrung zumindest teilweise in einer Radialrichtung des Lagers. Somit ist das Lager besonders einfach und robust mit Schmiermittel, insbesondere Öl, versorgbar.

Bei einer vorteilhaften Ausgestaltung verläuft die Bohrung zumindest teilweise parallel zur Axialrichtung des Lagers, wobei ein Getriebedeckel, insbesondere ein Lagerdeckel, vorgesehen ist, der das Lager verschließt und Mittel zur Versorgung des Lagers mit Schmieröl aus der Bohrung aufweist. Von Vorteil ist dabei, dass das Getriebegehäuse in Monoblock-Ausführung fertigbar ist, denn die axialen Bohrungen sind einfach von außen einbringbar.

Bei einer vorteilhaften Ausgestaltung ist die Öffnung des Leitrohrs in entgegengesetzter Richtung zur Richtung der Schwerkraft in der Bauform des Getriebes orientiert. Zusätzlich oder alternativ ist die Unterkante des Fangblechs in etwa parallel zur Achse des Zahnrads angeordnet ist. Von Vorteil ist dabei, dass die Schwerkraft ein Fließen des Öls im Schmiermittelkreislauf bewirkt, wodurch eine Pumpe verzichtbar ist.

Die Ölfangvorrichtung ist vorteilhaft aus Blech, beispielsweise Stahlblech oder Aluminiumblech oder Kupferblech, ausgeführt. In einer alternativen Ausgestaltung ist die Ölfangvorrichtung ganz oder teilweise aus Kunststoff ausgeführt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Leitrohr
- 2: Fangblech
- 3: Zunge
- 4: erster Endbereich des Leitrohrs
- 5: Leitbereich
- 6: Auffangbereich
- 7: Unterkante
- 8: Verbindungskante
- 9: Führungskante
- 10: Befestigungsbereich
- 11: Verbindungsfalz
- 20: Schlitz
- 30: Bohrung
- 31: Gehäuseteil
- 32: Lagerdeckel
- 33: Zahnrad
- 34: Welle
- 35: Getriebe
- 36: Verbindungsbereich
- 40: Leitrohr
- 41: Gehäuse
- 42: Bohrung
- 43: Lagerdeckel
- 44: Leitnut
- 45: Lager
- 46: Fangblech
- 47: Verbindungsbereich
- 48: Bohrung
- 49: Zahnrad
- 50: Leitrohr
- 51: Fangblech
- 52: Trichter
- 63: Eckbereich
- 54: Leitbereich
- 55: Auffangbereich
- 60, 61: Zahnrad
- 62: Welle
- 63: Öffnung

Die Erfindung wird nun anhand von Abbildungen näher erläutert:

Es zeigt
- Figur 1 eine Ölfangvorrichtung,
- Figur 2 eine Schnittansicht der Ölfangvorrichtung nach Figur 1,
- Figur 3 eine Schnittansicht eines Getriebes mit eingebauter Ölfangvorrichtung,
- Figur 4 eine Schnittansicht eines weiteren Getriebes mit eingebauter Ölfangvorrichtung,
- Figur 5 einen Teil einer weiteren Ölfangvorrichtung.

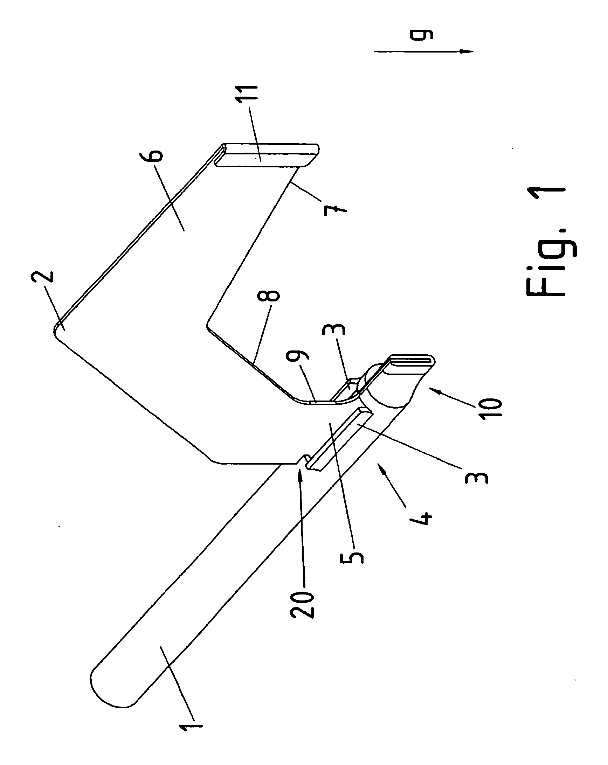

Bei der Ölfangvorrichtung nach Figur 1 greift ein Fangblech 2 in ein Leitrohr 1 und ist an diesem befestigt. Hierzu weist das Leitrohr 1 einen ersten Endbereich 4 auf, in dem eine Öffnung ausgebildet ist. Die Öffnung ist von Zungen 3 begrenzt. Das Fangblech 2 weist entsprechend einen ersten Endbereich auf, den Leitbereich 5, der in die Öffnung des Leitrohrs hineinragt. Die Zungen 3 der Öffnung bilden einen Teil des Randes der Öffnung und sind von der Oberfläche des Leitbereichs 5 beabstandet. Somit ist Schmieröl entlang des Leitbereichs 5 durch die Öffnung des Leitrohrs 4 in dieses hinein leitbar.

Ein Teilbereich des ersten Endbereichs 4 des Leitrohrs 1 ist als Befestigungsbereich 10 für das Fangblech 2 ausgebildet. Der Befestigungsbereich 10 ist nach Einlegen des Fangblechs 2 derart gequetscht, dass das Fangblech 2 am Leitrohr 1 fixiert ist. Zusätzlich zur Quetschung ist eine stoffschlüssige Verbindung, beispielsweise durch Löten, vorgesehen.

Das Fangblech 2 weist einen zweiten Endbereich auf, der als Auffangbereich 6 ausgebildet ist und zum Auffangen von Schmieröl vorgesehen ist. Dieses Schmieröl ist somit entlang des Fangblechs 2 durch die Öffnung des Leitrohrs 1 in dieses hinein leitbar.

Am Fangblech 2 sind eine Unterkante 7, eine Verbindungskante 8 und eine Führungskante 9 ausgebildet, die miteinander verbunden sind und ineinander über gehen. Wird die Ölfangvorrichtung beim Einbau in ein Getriebe derart orientiert, dass der mit g bezeichnete Pfeil in etwa die Richtung der Schwerkraft wiedergibt, so wird das Schmieröl entlang des Fangblechs 2 zum großen Teil durch die Abfolge der Unterkante 7, der Verbindungskante 8 und der Führungskante 9 in die Öffnung des Leitrohrs 1 geleitet. Hierzu ist das Fangblech 2 derart ausgebildet, das je zwei benachbarte Kanten einen Winkel von mehr als 135° einschließen. Die Unterkante 6 ist derart ausgebildet, dass sie einen Winkel von wenigstens 75° mit der Schwerkraftrichtung einschließt.

Am Fangblech 2 ist ein Verbindungsfalz 11 vorgesehen, in den ein zum Fangblech 2 gleichartig ausgebildetes Fangblech mit einem ebensolchen Verbindungsfalz in einer um 180° um die Kante des Verbindungsfalzes 11 gedrehten Position einsteckbar ist. Somit sind die zwei Fangbleche verbindbar, und es ist ein brückenartiges Fangblech ausgebildet, das an seinen Enden jeweils in einem Leitrohr gehalten ist und vorzugsweise jeweils in eine Öffnung mündet, deren Rand vom jeweiligen Fangblech 2 beabstandet ist zur Aufnahme von Schmieröl.

In einer alternativen Ausführung sind die zwei beschriebenen Fangbleche als ein einziges, bogenförmiges Fangblech ausgebildet, das an seinen Enden in beschriebener Weise in Leitrohren gehalten ist.

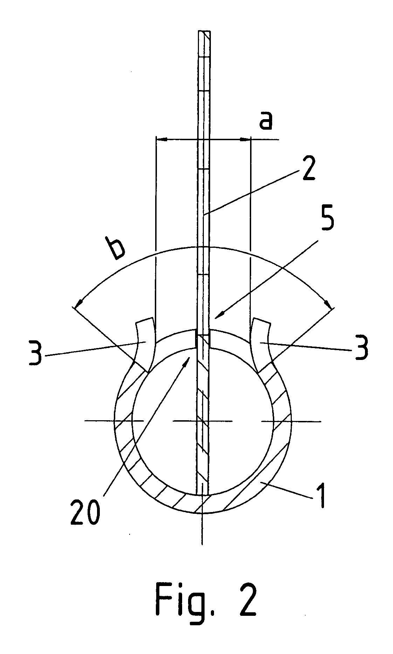

Figur 2 zeigt eine Schnittansicht durch den ersten Endbereich 4 des Leitrohrs 1 und den Leitbereich 5 des Fangblechs 2. Die Schnittebene liegt hierbei in etwa in der Hälfte der Öffnung des Leitrohrs 1 und senkrecht zu dessen Achse. Das Fangblech 2 ist durch den Boden des Leitrohrs 1 abgestützt. Das Leitrohr 1 weist einen Schlitz 20 auf, in den ein Teil des Leitbereichs 5 des Fangblechs 2 eingeschoben ist, wodurch das Fangblech 2 gegen ein Verkippen zumindest teilweise gesichert ist. Die Zungen 3 formen eine sich nach außen weitende Öffnung mit einer lichten Weite a, die vom Fangblech 2, insbesondere über den Leitbereich 5. fließendes Schmieröl ins Innere des Leitrohrs 2 aufnehmen kann. Das Maß a ist derart groß gewählt, dass das Schmieröl nicht durch physikalische Effekte wie Öberflächenspannung gehindert wird, in die Öffnung zu fließen. Vorzugsweise beträgt das Maß a wenigstens 5mm, besonders vorzugsweise wenigstens 8mm. Die Zungen 3 formen somit in der Schnittebene eine trichterförmige Öffnung zum Fangblech 2 hin, mit der Öl aufnehmbar ist, wobei möglichst wenig Öl an den Rändern der Öffnung vorbei fließt.

In alternativen Ausführungsbeispielen ist der Schlitz 20 teilweise im Leitrohr 1 und dazu passend teilweise im Fangblech 2 oder gänzlich im Fangblech 2 ausgebildet.

Die Ansätze der Zungen 3 am Leitrohr 1 sind vorzugsweise in einem relativen Öffnungswinkel b von 100° angeordnet.

In alternativen Ausführungsbeispielen beträgt der Öffnungswinkel b einen Wert zwischen 70° und 180°, vorzugsweise zwischen 80° und 110°.

Die Verbindung des Fangblechs 2 mit dem Leitrohr 1 umfasst vorteilhaft die folgenden Schritte. Zunächst werden ein erster und ein zweiter Schnitt in das Leitrohr 1 eingebracht, die jeweils in einer Ebene verlaufen, die transversal zu der Achse des Leitrohrs orientiert ist. Vorzugsweise ist diese Ebene senkrecht zu der Achse orientiert. Transversal bedeutet hierbei, dass der Schnittwinkel von Ebene und Achse größer Null ist, vorzugsweise größer als 5°, besonders vorzugsweise größer als 10°, ganz besonders vorzugsweise größer als 45°. Wie in Figur 2 erkennbar, werden diese Schnitte nur bis zu einer gewissen Tiefe in das Leitrohr 1 geführt. Durch die Schnitte wird somit jeweils eine Sekante des als Kreis idealisierten Leitrohrs definiert. Vorzugsweise verlaufen beide Sekanten in gleicher Höhe bezüglich der Achse des Leitrohrs 1 und parallel.

Dann wird ein dritter Schnitt in einer Ebene in das Leitrohr 1 eingebracht, die transversal zu den Ebenen der ersten beiden Schnitte orientiert ist. Transversal bedeutet hierbei, dass der Schnittwinkel der Ebenen größer Null ist, vorzugsweise größer als 5°, besonders vorzugsweise größer als 10°, ganz besonders vorzugsweise größer als 45°. Vorzugsweise ist die Ebene so orientiert, dass sie die Achse des Leitrohrs 1 enthält und mit den Ebenen der beiden ersten Schnitte rechte Winkel bildet. Der dritte Schnitt wird nur in eine Halbschale des Leitrohrs 1 eingebracht, und zwar von dem Ende des Leitrohrs 1 beginnend derart, dass erster und zweiter Schnitt jeweils gekreuzt werden. Somit ist ein H-förmiges System von Schnitten in das Leitrohr 1 eingebracht, wobei der Mittelbalken des H in ein Ende des Leitrohrs 1 mündet. Vorzugsweise reicht der Mittelbalken sowohl über den ersten als auch über den zweiten Schnitt hinaus. Durch das H-förmige System sind somit Zungen 3 ausgebildet. Diese Zungen 3 werden nach außen hin aufgebogen, wodurch eine Öffnung des Leitrohrs 1 ausgeformt ist.

In den nach dem Aufbiegen der Zungen verbleibenden Überrest des Mittelbalkens des H-förmigen Systems wird nun ein Fangblech 2 eingeführt. Anschließend wird das Ende des

Leitrohrs 1 wie in Figur 1 gezeigt verquetscht und verlötet, so dass das Fangblech 2 fest mit dem Leitrohr 1 verbunden ist.

Bei alternativen Fertigungsverfahren werden erster, zweiter und dritter Schnitt in einer anderen Reihefolge eingebracht.

Bei alternativen Fertigungsverfahren verlaufen die Schnitte nicht in Ebenen sondern allgemein in gekrümmten Flächen, die jedoch wie beschrieben transversal zueinander und zur Achse oder einer ausgezeichneten, gedachten Linie des Leitrohrs angeordnet sind

Bei alternativen Fertigungsverfahren werden die Zungen nach innen gebogen zur Bildung einer trichterartigen Öffnung.

Bei alternativen Fertigungsverfahren wird die Verbindung zwischen Fangblech und Leitrohr durch Schrauben und/oder Niete und/oder weitere formschlüssige Verbindungen bewirkt.

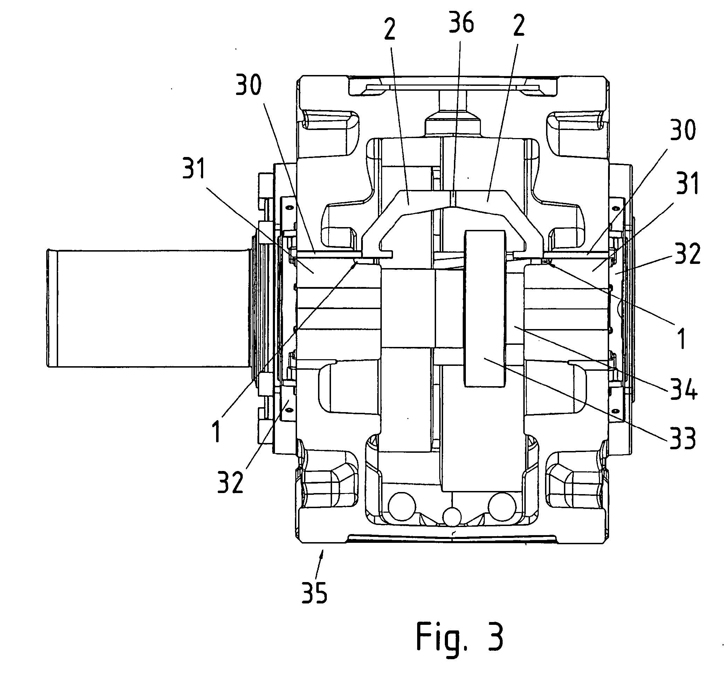

Figur 3 zeigt eine Schnittansicht eines Getriebes 35 mit montierter Ölfangvorrichtung. Das Getriebe 35 umfasst ein Gehäuseteil 31, der vorzugsweise Bestandteil eines Gehäuses in einstückiger Monoblock-Ausführung ist. Unter einer Monoblock-Ausführung wird in dieser Schrift die Ausführung des Getriebegehäuse, abgesehen von Deckeln, in einem Stück verstanden.

Das Getriebe 35 ist im Betrieb so ausgerichtet, dass die Richtung der Schwerkraft im Bild nach unten zeigt. Vorzugsweise ist der untere Bereich des Getriebeinnenraums mit Schmieröl befüllt zur Erzielung einer Tauchschmierung der Zahnräder.

Die Ölfangvorrichtung umfasst zwei Fangbleche 2 und zwei Leitrohre 1. Die Fangbleche 2 sind in einem Verbindungsbereich 36 miteinander formschlüssig und kraftschlüssig durch ineinandergreifende Falze verbunden. An dem jeweils anderen Ende ist jedes Fangblech 2 in einem Endbereich mit einem Leitrohr 1 verbunden. Diese Leitrohre 1 sind in Bohrungen 30 eines Gehäuseteils 31 eingeführt und zur Befestigung eingewalzt. Vorzugsweise kleiden sie Leitrohre 1 die Bohrungen 30 in gesamter Bohrungslänge aus.

Unter Einwalzen wird in dieser Schrift ein Aufweiten des Durchmessers eines in einer Bohrung angeordneten Rohres verstanden, wobei das Rohr vor dem Aufweiten in die Bohrung einführbar ist und nach dem Aufweiten durch die Bohrung nach Art einer Presspassung kraftschlüssig und/oder formschlüssig gehalten wird.

Die Fangbleche 2 formen somit ein bogenförmiges Teil, das ähnlich einer Brücke ein Zahnrad 33 überspannt und sich an einem Gehäuseteil 31 abstützt und von diesem gehalten wird. Die Fangbleche 2 bilden in den Endbereichen, die sich an den Verbindungsbereich 36 anschließen und die den Verbindungsbereich 36 vorzugsweise umfassen, einen Auffangbereich aus, der transversal zur Umfangsrichtung des Zahnrades 33 angeordnet sind. Dieser Auffangbereich erstreckt sich im Ausführungsbeispiel nach der Figur 3 zumindest von dem Verbindungsbereich ausgehend mindestens bis zu den ersten Knicken der Kanten der Fangbleche 2, vorzugsweise mindestens bis zur Hälfte des sich anschließenden Bereichs bis zu den folgenden Knicken der Fangbleche 2.

Transversal bezeichnet in dieser Schrift die Eigenschaft zweier geometrischer Objekte, sich in einem von Null verschiedenen Winkel zu schneiden, im Gegensatz zu einer tangentialen Berührung. Eine transversale Anordnung des Auffangbereichs bedeutet daher, dass die durch das Zahnrad 33 definierte, auf eine Zylinderform genäherte Einhüllende des Zahnrads 33 die Verlängerung des Auffangbereichs transversal schneidet. Hierdurch wird bewirkt, dass von dem Zahnrad 33 tangential abgehende Strahlen den Auffangbereich transversal schneiden und dass folglich vom Zahnrad 33 weggeschleudertes Schmieröl durch den Auffangbereich aufgenommen wird.

Die Verbindung der Fangbleche 2 mit den Leitrohren 1 ist vorzugsweise gemäß Figur 1 vorgesehen. Somit ist das durch den Auffangbereich aufgenommene Schmieröl in die Leitrohre 1 leitbar und in diesen durch die Bohrungen 30. Die Schwerkraft bewirkt hierbei das Fließen des aufgenommen Öls in die Leitrohre 1.

Das Zahnrad 33 ist auf einer Welle 34 angeordnet und mit dieser verbunden. Die Welle 34 ist ihrerseits, wie in Figur 3 gezeigt, in dem Gehäuseteil 31 gelagert. Die Bohrungen 30 sind somit axial bezüglich der Welle 34 und deren Lager ausgereichtet. Somit sind die Bohrungen 30 einfach in den Gehäuseteil 31 einbringbar.

Das von der Ölfangvorrichtung aufgenommene Schmieröl wird im Betrieb durch die Bohrungen 30 geleitet, die in Ausnehmungen eines Lagerdeckels 32 münden. Diese Ausnehmungen des Lagerdeckels verlaufen in etwa radial in Bezug auf die jeweiligen Lager und versorgen somit die Lager mit dem Schmieröl von der Ölfangvorrichtung.

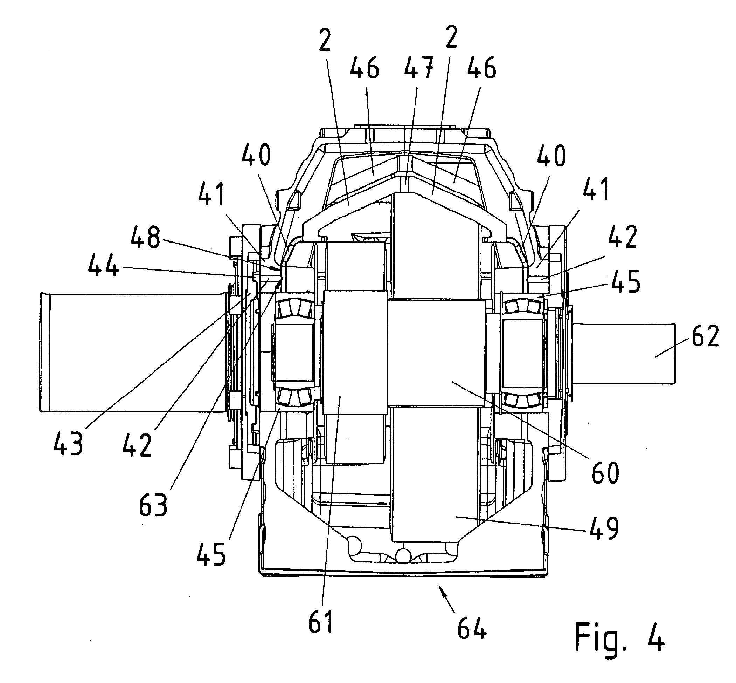

Figur 4 zeigt eine Schnittansicht eines weiteren Ausführungsbeispiels. Ein Getriebe 64 umfasst ein Gehäuse mit Gehäuseteilen 42. Das Gehäuse ist vorzugsweise mehrteilig ausgebildet. Besonders vorzugsweise ist es aus zwei Gehäuseschalen und einer Anzahl von Deckeln zusammengesetzt. Das Getriebe 64 ist im Betrieb so ausgerichtet, dass die Richtung der Schwerkraft im Bild nach unten zeigt.

Im Inneren des Gehäuses ist eine Ölfangvorrichtung angeordnet, die Fangbleche 2 und Leitrohre 40 umfasst. Die Fangbleche 2 sind in einem Verbindungsbereich 47 verbunden und greifen in Öffnungen der Leitrohre 40 gemäß Figur 1.

Vorzugsweise ist die untere Schale des Gehäuses des Getriebes 64 derart ausgeführt, dass sie mit einer gleichartig ausgeführten Schale zu einem vollen Gehäuse kombinierbar ist. Insbesondere sind die mechanische Schnittstelle der unteren Schale, also Flansch, Aufsetzund Zentrierhilfen und Bohrlöcher für Verbindungsschrauben oder -bolzen, sowie die Anordnung der Lagerausnahmen hierzu entsprechend ausgebildet. Ebenfalls sind die Lagerdeckel und die Getriebedeckel, welche die Trennlinie der Gehäuseschalen überdecken, entsprechend ausgebildet, insbesondere hinsichtlich Anordnung der Bohrlöcher für Schrauben, der Verbindungs-Flanschflächen und der Dichtmittel. Besonderes vorzugsweise sind in der unteren Schale Ölfangmittel wie Fangtaschen vorgesehen, die nur bei Anordnung der unteren Schale als oberes Gegenstück zu einer weiteren unteren Schale ihre bestimmungsgemäße Wirkung entfalten können. Somit ist eine Baureihe von Getriebegehäusen und also Getrieben bildbar, die erste Varianten mit zwei gleichartigen Gehäusehälften und zweite Varianten mit verschiedenartigen Gehäusehälften umfasst. Von Vorteil ist dabei, dass die ersten Varianten ein für alle Baumformen des Getriebes, also für alle räumlichen Orientierungen am Einsatzort, geeignetes Gehäuse aufweisen, während die zweiten Varianten ein gewichtsreduziertes Gehäuse aufweisen.

In alternativen Ausführungsbeispielen sind die Fangbleche 2 einstückig als ein einziges Blech ausgebildet. In alternativen Ausführungsbeispielen ist nur ein Fangblech 2 ausgebildet, dass sich auf seiner vom Leitrohr 1 abgewandten Seite an einer Ausformung des Gehäuses abstützt.

Im Inneren des Getriebes sind weiter Zahnräder 60, 61 auf einer Welle 62 angeordnet. Die Welle 62 ist auf beiden Seiten in Lagern 45 in einem Gehäuseteil 41 festgelegt. In dem Gehäuseteil 41 sind bezüglich der Lager 45 radial ausgerichtete Bohrungen 48 und axial ausgerichtete Bohrungen 42 eingebracht. Für die Fertigung radial ausgerichteter Bohrungen 48 ist eine Zweiteilung des Getriebegehäuses entlang der Mitten der Bohrungen für die Lager 45 vorteilhaft.

In die radial ausgerichteten Bohrungen 42 ist jeweils ein Endbereich eines Leitrohrs 1 eingeführt und eingewalzt. Somit sind die Fangbleche 2, die einen bogenförmigen Auffangbereich für von den Zahnrädern 60, 61 der Welle 62 weggeschleudertes Schmieröl bilden, am Getriebegehäuse gehalten. Durch die Zeiteilung des Getriebegehäuses ist ein Befestigen der Ölfangvorrichtung vor dem Aufsetzen der oberen Gehäuseschale vorteilhaft ausführbar. Ebenso ist die obere Schale des Getriebegehäuses somit zu Wartungszwecken gemeinsam mit der Ölfangvorrichtung abnehmbar.

Durch die radial ausgerichteten Bohrungen 42 wird das Lager 45 mit Schmieröl von der Ölfangvorrichtung versorgt.

Die Leitrohre 1 weisen vorzugsweise Öffnungen 63 auf, durch die Schmieröl in die axial ausgerichteten Bohrungen 42 austreten kann. Somit wird Schmieröl zusätzlich oder je nach Ausbildung des Lagers 45 ausschließlich durch die axial ausgerichteten Bohrungen 42 in Leitnuten 44 der Lagerdeckel 43 geleitet und durch die Leitnuten 44 weiter zur Versorgung der Lagers 45.

In dem Getriebe nach Figur 4 ist ein weiteres Zahnrad 49 vorgesehen, das teilweise Schmieröl an die von den Fangblechen 2 gebildete Ölfangvorrichtung schleudert und teilweise Schmieröl an eine weitere, von Fangblechen 46 gebildete Ölfangvorrichtung schleudert. Diese weitere Ölfangvorrichtung versorgt vorzugsweise die Lager der Welle, auf dem das Zahnrad 49 angeordnet ist.

Vorzugsweise versorgt somit jedes Zahnrad des Getriebes über eine ihm zugeordnete, insbesondere es brückenförmig überspannende oder sich bogenförmig um es erstreckende, Ölfangvorrichiung und weiter über Bohrungen im Gehäuse die Lager der Welle, auf der das Zahnrad angeordnet ist. Jede Ölfangvorrichtung ist somit durch die Schmierölleitmittel gleichzeitig auch befestigt. Weitere Befestigungsmittel können entfallen. Die Funktionsweise der Ölfangvorrichtungen ist analog zu der bei Figur 3 beschriebenen.

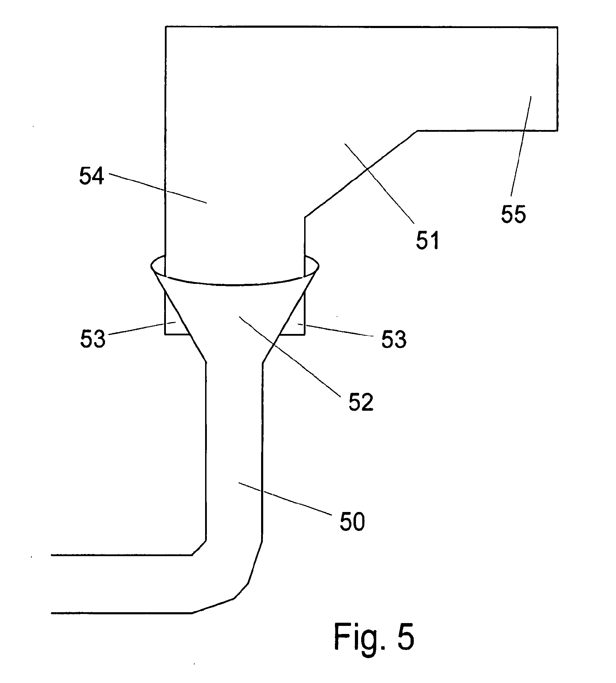

Figur 5 zeigt einen Teilbereich eines weiteren Ausführungsbeispiel für eine Ölfangvorrichtung. Ein Leitrohr 50 formt in seinem ersten Endbereich eine Öffnung in Form eines Trichters 52 aus, in den ein Fangblech 51 ragt. Das Fangblech 51 mündet somit in den Trichter 52 und ist an diesem befestigt. Zur Befestigung ist in den Trichter 52 in einer die Trichterachse enthaltenden Ebene ein Schnitt eingebracht, in den ein erster Endbereich des Fangblechs 2 eingesteckt ist. Dieser erste Endbereich bildet einen Leitbereich 54 des Fangblechs 51. Der Rand der Öffnung des Trichters 52 ist hierbei vom Leitbereich 54 beabstandet, so dass Schmieröl über Leitbereich 54 in das Leitrohr 50 leitbar ist.

Eckbereiche 53 des Fangblechs 51 ragen aus dem Trichter 52 heraus. Leitrohr 50 und Fangblech 51 sind stoffschlüssig durch Löten verbunden. Somit ist einerseits eine stabile Befestigung des Fangblechs 51 an dem Leitrohr ausgebildet und andererseits ein Fließweg für Schmieröl vom Fangblech 51 in das Leitrohr 50 bereitgestellt.

Am anderen Ende des Fangblechs 51 ist ein zweiter Endbereich in Form eines Auffangbereichs 55 ausgebildet, der mit einem gleichartigen Fangblech 51 verbunden ist. Vorzugsweise sind beide Fangbleche als ein Stück gefertigt.

Das Leitrohr 50 weist eine Biegung auf und ist somit in Figur 3 in die Bohrung 30 einführbar.

In einem alternativen Ausführungsbeispiel weist das Leitrohr 50 keine Biegung auf und ist somit in eine Radialbohrung 48 in Figur 4 einführbar.

In alternativen Ausführungsbeispielen weist das Leitrohr einen unrunden, beispielsweise elliptischen oder mandelförmigen oder dreieckigen oder quadratischen, Querschnitt auf.

In alternativen Ausführungsbeispielen sind statt der Fangbleche Bauteile mit veränderlicher Dicke vorgesehen, die jeweils mindestens eine zur Umfangsrichtung eines Zahnrads transversal angeordnete Auffangfläche aufweisen. Beispielsweise ist statt des Fangblechs ein V-Profil oder ein Dreieck- oder Viereckprofil oder ein Stab, Insbesondere ein gebogener Stab, vorgesehen.

## Patentansprüche

1. Ölfangvorrichtung, insbesondere zum Einleiten von Schmiermittel oder Schmieröl in eine Bohrung (30, 48) oder ein Rohr,
umfassend ein Fangblech (2, 46, 51) zum Auffangen von von Zahnrädern weggeschleudertem Öl
und ein Leitrohr (1, 40, 50),
wobei ein erster Endbereich (5, 54) des Fangblechs (2, 46, 51) in einem ersten Endbereich (4, 52) des Leitrohrs (1, 40, 50) vorgesehen ist und in den ersten Endbereich (4, 52) des Leitrohrs (1, 40, 50) greift,
wobei der erste Endbereich (4, 52) des Leitrohrs (1, 40, 50) eine Öffnung aufweist, in welche der erste Endbereich (5, 54) des Fangblechs (2, 46, 51) hineinragt, wobei Seitenflächen (5, 54) des Fangblechs (2, 46, 51) von dem Rand der Öffnung beabstandet sind, sodass Öl entlang der Seitenflächen (5, 54) in das Leitrohr (1, 40, 50) hinein fließen kann, und wobei das Fangblech (2, 46, 51) in einem Teilbereich seines ersten Endbereichs (5, 54) fixiert ist zumindest durch kraftschlüssige, formschlüssige oder stoffschlüssige Verbindung des Fangblechs (2, 46, 51) mit einem Teilbereich des ersten Endbereichs (4, 52) des Leitrohrs (1, 40, 50),
**dadurch gekennzeichnet, dass** das Faugblech (2,46,51) zwei Seitenflächen (5,54) aufweist, und, dass der Rand der Öffnung zu diesen beiden Seitenflächen (5, 54) des Fangblechs (2, 46, 51) beabstandet ist, so dass diese beide Seitenflächen zur Führung eines Ölflusses, der je nach Laufrichtung von den Zahnrädern weggeschleudert wird, einsetzbar sind.

2. Ölfangvorrichtung nach Anspruch 1,
**dadurch gekennzeichnet, dass**
die Öffnung zumindest teilweise bezüglich des ersten Endbereichs (4, 52) des Leitrohrs (1, 40, 50) radial orientiert ist
oder
die Öffnung zumindest teilweise bezüglich des ersten Endbereichs (4, 52) des Leitrohrs (1, 40, 50) axial orientiert ist.

3. Ölfangvorrichtung nach mindestens einem der vorangegangenen Ansprüche,
**dadurch gekennzeichnet, dass**
durch die Fixierung des Fangblechs (2, 46, 51) ein Ende (10) des Leitrohrs (1, 40, 50) verschlossen ist.

4. Ölfangvorrichtung nach mindestens einem der vorangegangenen Ansprüche,
**dadurch gekennzeichnet, dass**
ein zweiter Endbereich des Fangblechs (2, 46, 51) über das Leitrohr in axialer und/oder in radialer Richtung hinausragt.

5. Ölfangvorrichtung nach mindestens einem der vorangegangenen Ansprüche,
**dadurch gekennzeichnet, dass**
der erste Endbereich (5, 54) des Fangblechs (2, 46, 51) eine Führungskante (9) aufweist, die in etwa in einer durch die Öffnung festgelegten Richtung verläuft,
und der zweite Endbereich des Fangblechs (2, 46, 51) eine Unterkante (7) aufweist, die in etwa in einem rechten Winkel zur Richtung der Führungskante (9) verläuft und eine Verbindungskante (8) des Fangblechs (2, 46, 51) die Unterkante (7) mit der Führungskante (9) verbindet,
wobei die Führungskante (9) mit der Verbindungskante (8) und die Unterkante (7) mit der Verbindungskante (8) jeweils in einem Winkel aneinander stoßen, der größer als 90° ist, insbesondere größer als 135°.

6. Ölfangvorrichtung nach mindestens einem der vorangegangenen Ansprüche,
**dadurch gekennzeichnet, dass**
der zweite Endbereich (47) des Fangblechs (2, 46) Mittel zum Verbinden mit einem weiteren Fangblech (2, 46) aufweist
und/oder der zweite Endbereich (47) des Fangblechs (2, 46, 51) eine Fangfläche aufweist, die in eine der Seitenflächen (5, 54) des Fangblechs (2, 46, 51) mündet
und/oder das Fangblech (2, 46, 51) an der vom Teilbereich des ersten Endbereichs (4, 52) des Leitrohrs (1, 40, 50) abgewandten Seite der Öffnung befestigt ist.

7. Olfangvorrichtung,
**dadurch gekennzeichnet, dass**
zwei Ölfangvorrichtungen nach mindestens einem der vorangegangenen Ansprüche vorgesehen sind,
wobei die zweiten Endbereiche (47) der jeweiligen Fangbleche (2, 46) verbunden oder als ein Stück ausgebildet sind.

8. Verfahren zum Verbinden eines Blechs (51) mit einem Rohr (50) zur Fertigung einer Ölfangvorrichtung nach einem der Ansprüche 1 bis 7,
**dadurch gekennzeichnet, dass**
in einem Endbereich (4) des Rohrs (50) ein Schnitt eingebracht wird,
das Blech (51) in den Schnitt eingeführt wird
und das Blech (51) mit dem Rohr (50) verbunden wird, insbesondere stoffschlüssig und/oder kraftschlüssig und/oder formschlüssig,
insbesondere wobei im Endbereich (52) eine Öffnung ausgebildet wird, die sich trichterförmig zum Blech (51) hin öffnet.

9. Verfahren zum Verbinden eines Blechs (2, 46) mit einem Rohr (1) zur Fertigung einer Ölfangvorrichtung nach einem Ansprüche 1 bis 7,
**dadurch gekennzeichnet, dass**
i. in einem Endbereich des Rohrs (1)
i.1. ein erster Schnitt in einer ersten Ebene, die transversal zur Achse des Endbereichs (4, 52) des Rohrs (1) orientiert ist, eingebracht wird, wobei der Schnitt das Rohr (1) bis zu einer Sekante aufschneidet,
i.2. ein zweiter Schnitt in einer zweiten Ebene, die transversal zur Achse des Endbereichs (4, 52) des Rohrs (1) orientiert ist, eingebracht wird, wobei der Schnitt das Rohr (1) bis zu einer Sekante aufschneidet,
i.3. ein dritter Schnitt (20) in einer dritten Ebene eingebracht wird, die transversal zu der ersten Ebene und der zweiten Ebene orientiert ist, wobei der Schnitt am Ende des Rohrs (1) beginnt und den ersten Schnitt und den zweiten Schnitt schneidet und somit in dem Endbereich in der Rohrwandung zwei jeweils durch die drei Schnitte begrenzte Zungen (3) ausbildet,
ii. die Zungen (3) in Umfangsrichtung aufgebogen werden,
iii. das Blech (2, 46) in den dritten Schnitt eingeführt wird,
iv. ein Teilbereich des Endbereichs (4, 52) verformt, insbesondere gequetscht, wird zur Verbindung des Blechs (2, 46) mit dem Rohr.

10. Verfahren nach Anspruch 8 oder 9,
**dadurch gekennzeichnet, dass**
der Teilbereich des Endbereichs (4, 52) mit dem Blech (2, 46, 51) stoffschlüssig verbunden wird.

11. Getriebe (35),
umfassend ein Gehäuse (31), ein Zahnrad (33, 49) und eine Ölfangvorrichtung nach einem der Ansprüche 1 bis 7,
**dadurch gekennzeichnet, dass**
die Ölfangvorrichtung eine Auffangfläche (6, 55) zur Aufnahme von vom Zahnrad (33; 49) weggeschleudertem Schmieröl aufweist,
wobei sich die Auffangfläche (6, 55) bogenförmig teilweise um das Zahnrad (33, 49) erstreckt,
dass die Auffangfläche (6, 55) in einem Leitrohr (1, 40, 50) befestigt ist,
wobei Schmieröl von der Auffangfläche (6, 55) in das Leitrohr (1, 40, 50) leitbar ist,
und dass das Leitrohr (1, 40, 50) in einer Bohrung (30, 48) des Getriebegehäuses (31) befestigt ist,
wobei Schmieröl von dem Leitrohr (1, 40, 50) durch die Bohrung (30, 48) zur Versorgung eines Lagers (45) leitbar ist.

12. Getriebe (35),
umfassend ein Gehäuse (31), ein Zahnrad (33, 49) und eine Ölfangvorrichtung nach einem der, Ansprüche 1 bis 7,
**dadurch gekenntzeichnet, dass**
die Ölfangvorrichtung ein Fangblech (2, 46, 51) und ein erstes Leitrohr (1, 40, 50) umfasst, wobei das Fangblech (2, 46, 51) eine Fangfläche (6, 55) aufweist, die transversal zur Umfangsrichtung des Zahnrades (33, 49) angeordnet ist,
und ein erstes Ende des Fangblechs (2, 46, 51) in ein erstes Ende des ersten Leitrohrs (1, 40, 50) ragt, insbesondere greift,
und ein zweites Ende des ersten Leitrohrs (1, 40, 50) am Gehäuse (31) befestigt ist.

13. Getriebe (35) nach Anspruch 11 oder 12,
**dadurch gekennzeichnet, dass**
ein zweites Leitrohr (1, 40, 50) vorgesehen ist, wobei
das Fangblech (2, 46) durch erstes Leitrohr (1, 40, 50) und zweites Leitrohr (1, 40, 50) gehalten ist
und/oder im Gehäuseteil (31) eine Bohrung (30, 48) vorgesehen ist,
in der das zweite Ende des ersten Leitrohrs (1, 40, 50) eingeführt ist und/oder das erste Leitrohr (1, 40, 50) in der Bohrung (30, 48) gehalten ist
und/oder das zweite Ende des ersten Leitrohrs (1, 40, 50) in die Bohrung (30, 48) eingewalzt ist
und/oder ein Lager (45), insbesondere zur Lagerung einer das Zahnrad (33, 49) tragenden Welle (34), vorgesehen ist, wobei durch die Bohrung (30, 48) das Lager (45) mit Schmieröt versorgbar ist, insbesondere mit vom Zahnrad (33, 49) weggeschleudertem, durch das Fangblech (2, 46, 51) aufgenommenem Öl
und/oder die Bohrung (30, 48) zumindest teilweise in einer Radialrichtung des Lagers (45) verläuft.

14. Getriebe (35) nach einem der Ansprüche 11 bis 13,
**dadurch gekennzeichnet, dass**
die Bohrung (30, 42, 48) zumindest teilweise parallel zur Axialrichtung des Lagers (45) verläuft
und ein Getriebedeckel (32, 43) das Lager (45) verschließt und Mittel (44) zur Versorgung des Lagers (45) mit Schmieröl aus der Bohrung (30, 42, 48) aufweist.

15. Getriebe (35) nach einem der Ansprüche 11 bis 14,
**dadurch gekennzeichnet, dass**
die Öffnung des Leitrohrs (1, 40, 50) der Ölfangvorrichtung in entgegengesetzter Richtung zur Richtung der Schwerkraft in der Bauform des Getriebes (35) orientiert ist und die Unterkante (7) des Fangblechs (2, 46, 51) in etwa parallel zur Achse des Zahnrads angeordnet ist.

## Claims

1. Oil collection device, in particular for introducing lubricant or lubricating oil into a bore (30, 48) or a pipe, comprising a collection plate (2, 46, 51) for collecting oil dispersed by gearwheels and a conducting pipe (1, 40, 50), a first end region (5, 54) of the collection plate (2, 46, 51) being provided in a first end region (4, 52) of the conducting pipe (1, 40, 50) and engaging inside the first end region (4, 52) of the conducting pipe (1, 40, 50), the first end region (4, 52) of the conducting pipe (1, 40, 50) having an opening into which the first end region (5, 54) of the collection plate (2, 46, 51) projects, the side surfaces (5, 54) of the collection plate (2, 46, 51) being spaced from the edge of the opening so that oil is able to flow along the side surfaces (5, 54) into the conducting pipe (1, 40, 50), the collection plate (2, 46, 51) being fixed in a partial zone of its first end region (5, 54) at least by means of a force-locked, form-locked or material-bonded connection of the collection plate (2, 46, 51) to a partial zone of the first end region (4, 52) of the conducting pipe (1, 40, 50), **characterized in that** the collection plate (2, 46, 51) has two side surfaces (5, 54) and **in that** the edge of the opening is spaced from these two side surfaces (5, 54) of the collection plate (2, 46, 51) so that these two side surfaces can be used to guide a flow of oil which is dispersed depending on the direction of rotation of the gearwheels.

2. Oil collection device according to Claim 1, **characterized in that** the opening is radially oriented at least partially with respect to the first end region (4, 52) of the conducting pipe (1, 40, 50) or the opening is axially oriented at least partially with respect to the first end region (4, 52) of the conducting pipe (1, 40, 50).

3. Oil collection device according to at least one of the preceding claims, **characterized in that**, by means of fixing of the collection plate (2, 46, 51), one end (10) of the conducting pipe (1, 40, 50) is sealed.

4. Oil collection device according to at least one of the preceding claims, **characterized in that** a second end region of the collection plate (2, 46, 51) projects over the conducting pipe in an axial and/or in a radial direction.

5. Oil collection device according to at least one of the preceding claims, **characterized in that** the first end region (5, 54) of the collection plate (2, 46, 51) has a guiding edge (9) which extends in approximately a direction defined by the opening, and the second end region of the collection plate (2, 46, 51) has a bottom edge (7) which extends approximately at right angles to the direction of the guiding edge (9), and a connecting edge (8) of the collection plate (2, 46, 51) connects the bottom edge (7) to the guiding edge (9), the guiding edge (9) meeting with the connecting edge (8) and the bottom edge (7) meeting with the connecting edge (8) in each case at an angle which is greater than 90°, in particular greater than 135°.

6. Oil collection device according to at least one of the preceding claims, **characterized in that** the second end region (47) of the collection plate (2, 46) has means for connection to a further collection plate (2, 46), and/or the second end region (47) of the collection plate (2, 46, 51) has a collection surface which leads into one of the side surfaces (5, 54) of the collection plate (2, 46, 51), and/or the collection plate (2, 46, 51) is secured on the side of the opening directed away from the partial zone of the first end region (4, 52) of the conducting pipe (1, 40, 50).

7. Oil collection device, **characterized in that** two oil collection devices are provided according to at least one of the preceding claims, the two end regions (47) of the respective collection plates (2, 46) being connected or being formed as one piece.

8. Method for connecting a plate (51) to a pipe (50) in order to produce an oil collection device according to one of Claims 1 to 7, **characterized in that** a cut is made in an end region (4) of the pipe (50), the plate (51) is introduced into the cut and the plate (51) is connected to the pipe (50), in particular in a material-bonded and/or force-fitting and/or form-fitting manner, in particular an opening being formed in the end region (52) so as to open out towards the plate (51) in the manner of a funnel.

9. Method for connecting a plate (2, 46) to a pipe (1) for producing an oil collection device according to one of Claims 1 to 7, **characterized in that**
i. in an end region of the pipe (1)
i.1. a first cut is made in a first plane which is oriented transversely with respect to the axis of the end region (4, 52) of the pipe (1), the cut intersecting the pipe (1) as far as a secant,
i.2. a second cut is made in a second plane which is oriented transversely with respect to the axis of the end region (4, 52) of the pipe (1), the cut intersecting the pipe (1) as far as a secant,
i.3. a third cut (20) is made in a third plane which is oriented transversely with respect to the first plane and the second plane, the cut beginning on the end of the pipe (1) and intersecting the first cut and the second cut and thus forming in the end region in the pipe wall two tongues (3) respectively defined by the three cuts,
ii. the tongues (3) are bent upwards in the circumferential direction,
iii. the plate (2, 46) is introduced into the third cut,
iv. a partial zone of the end region (4, 52) is deformed, in particular squashed, in order to connect the plate (2, 46) to the pipe.

10. Method according to Claim 8 or 9, **characterized in that** the partial zone of the end region (4, 52) is connected to the plate (2, 46, 51) in a material-bonded manner.

11. Transmission (35) comprising a housing (31), a gearwheel (33, 49) and an oil collection device according to one of Claims 1 to 7, **characterized in that** the oil collection device has a collection surface (6, 55) for receiving lubricating oil dispersed by the gearwheel (33; 49), the collection surface (6, 55) extending in the manner of an arc partially around the gearwheel (33, 49), **in that** the collection surface (6, 55) is secured in a conducting pipe (1, 40, 50), lubricating oil being able to be conducted by the collection surface (6, 55) into the conducting pipe (1, 40, 50), and **in that** the conducting pipe (1, 40, 50) is secured inside a bore (30, 48) of the transmission housing (31), lubricating oil being able to be conducted by the conducting pipe (1, 40, 50) through the bore (30, 48) in order to supply a bearing (45).

12. Transmission (35), comprising a housing (31), a gearwheel (33, 49) and an oil collection device according to one of Claims 1 to 7, **characterized in that** the oil collection device comprises a collection plate (2, 46, 51) and a first conducting pipe (1, 40, 50), the collection plate (2, 46, 51) having a collection surface (6, 55) which is arranged transversely with respect to the circumferential direction of the gearwheel (33, 49), and a first end of the collection plate (2, 46, 51) projecting into, in particular engaging in, a first end of the first conducting pipe (1, 40, 50), and a second end of the first conducting pipe (1, 40, 50) being secured to the housing part (31).

13. Transmission (35) according to Claim 11 or 12, **characterized in that** a second conducting pipe (1, 40, 50) is provided, the collection plate (2, 46) being held by first conducting pipe (1, 40, 50) and second conducting pipe (1, 40, 50), and/or a bore (30, 48) is provided in the housing part (31), the second end of the first conducting pipe (1, 40, 50) being introduced into said bore, and/or the first conducting pipe (1, 40, 50) is held inside the bore (30, 48), and/or the second end of the first conducting pipe (1, 40, 50) is rolled into the bore (30, 48), and/or a bearing (45), in particular for mounting a shaft (34) carrying the gearwheel (33, 49), is provided, the bearing (45) being able to be supplied, via the bore (30, 48), with lubricating oil, in particular oil dispersed by the gearwheel (33, 49) and received by the collection plate (2, 46, 51), and/or the bore (30, 48) extends at least partially in a radial direction of the bearing (45).

14. Transmission (35) according to one of Claims 11 to 13, **characterized in that** the bore (30, 42, 48) extends at least partially parallel to the axial direction of the bearing (45) and a transmission cover (32, 43) seals the bearing (45) and has means (44) for supplying the bearing (45) with lubricating oil from the bore (30, 42, 48).

15. Transmission (35) according to one of Claims 11 to 14, **characterized in that** the opening in the conducting pipe (1, 40, 50) of the oil collection device is oriented in the opposite direction to the direction of gravity in the design of the transmission (35) and the bottom edge (7) of the collection plate (2, 46, 51) is arranged approximately parallel to the axis of the gearwheel.

## Revendications

1. Dispositif collecteur d'huile, notamment destiné à l'introduction d'agent lubrifiant ou d'huile lubrifiante dans un alésage (30, 48) ou une tubulure,
comprenant une tôle collectrice (2, 46, 51) conçue pour recueillir de l'huile projetée par des roues dentées
et une tubulure de canalisation (1, 40, 50),
une première région extrême (5, 54) de ladite tôle collectrice (2, 46, 51) étant prévue dans une première région extrême (4, 52) de ladite tubulure de canalisation (1, 40, 50), et s'engageant dans ladite première région extrême (4, 52) de la tubulure de canalisation (1, 40, 50),
ladite première région extrême (4, 52) de la tubulure de canalisation (1, 40, 50) présentant un orifice dans lequel pénètre la première région extrême (5, 54) de la tôle collectrice (2, 46,51),
des surfaces latérales (5, 54) de ladite tôle collectrice (2, 46, 51) étant espacées du bord dudit orifice, de telle sorte que de l'huile puisse affluer dans la tubulure de canalisation (1, 40, 50) le long desdites surfaces latérales (5, 54),
et ladite tôle collectrice (2, 46, 51) étant consignée à demeure dans une zone partielle de sa première région extrême (5, 54) suite à au moins une liaison de ladite tôle collectrice (2, 46, 51) avec une zone partielle de la première région extrême (4, 52) de ladite tubulure de canalisation (1, 40, 50), instaurée par interaction mécanique, par concordance de formes ou par solidarisation matérielle,
**caractérisé par le fait que**
la tôle collectrice (2, 46, 51) présente deux surfaces latérales (5, 54) ; et que le bord de l'orifice est situé à distance de ces deux surfaces latérales (5, 54) de ladite tôle collectrice (2, 46, 51), de sorte que ces deux surfaces latérales peuvent être utilisées pour le guidage d'un écoulement d'huile projeté, par les roues dentées, en fonction du sens de roulement.

2. Dispositif collecteur d'huile, selon la revendication 1,
**caractérisé par le fait**
**que** l'orifice est orienté au moins partiellement dans le sens radial, vis-à-vis de la première région extrême (4, 52) de la tubulure de canalisation (1, 40, 50) ;
ou
**que** ledit orifice est orienté au moins partiellement dans le sens axial, vis-à-vis de ladite première région extrême (4, 52) de ladite tubulure de canalisation (1, 40, 50).

3. Dispositif collecteur d'huile, selon au moins l'une des revendications précédentes,
**caractérisé par le fait**
**qu'**une extrémité (10) de la tubulure de canalisation (1, 40, 50) est obturée par la consignation à demeure de la tôle collectrice (2, 46, 51).

4. Dispositif collecteur d'huile, selon au moins l'une des revendications précédentes,
**caractérisé par le fait**
**qu'**une seconde région extrême de la tôle collectrice (2, 46, 51) fait saillie, dans le sens axial et/ou radial, au-delà de la tubulure de canalisation.

5. Dispositif collecteur d'huile, selon au moins l'une des revendications précédentes,
**caractérisé par le fait**
**que** la première région extrême (5, 54) de la tôle collectrice (2, 46, 51) offre une arête de guidage (9) s'étendant, à peu près, dans une direction fermement établie par l'orifice,
la seconde région extrême de ladite tôle collectrice (2, 46, 51) comportant une arête inférieure (7) qui s'étend, approximativement, à angle droit par rapport à la direction de ladite arête de guidage (9),
et une arête de liaison (8) de ladite tôle collectrice (2, 46, 51) reliant ladite arête inférieure (7) à ladite arête de guidage (9),
sachant que ladite arête de guidage (9) et ladite arête de liaison (8), et ladite arête inférieure (7) et ladite arête de liaison (8), se rencontrent mutuellement, à chaque fois, en décrivant un angle supérieur à 90° et notamment supérieur à 135°.

6. Dispositif collecteur d'huile, selon au moins l'une des revendications précédentes,
**caractérisé par le fait**
**que** la seconde région extrême (47) de la tôle collectrice (2, 46) comporte des moyens destinés à la liaison avec une tôle collectrice supplémentaire (2, 46) ;
et/ou que la seconde région extrême (47) de la tôle collectrice (2, 46, 51) présente une surface collectrice fusionnant dans l'une des surfaces latérales (5, 54) de ladite tôle collectrice (2, 46, 5 1) ;
et/ou que ladite tôle collectrice (2, 46, 51) est fixée du côté de l'orifice qui est tourné à l'opposé de la zone partielle de la première région extrême (4, 52) de la tubulure de canalisation (1, 40, 50).

7. Dispositif collecteur d'huile,
**caractérisé par**
la présence de deux dispositifs collecteurs d'huile, conformes à au moins l'une des revendications précédentes,
les secondes régions extrêmes (47) des tôles collectrices respectives (2, 46) étant rattachées, ou réalisées d'une seule pièce.

8. Procédé de liaison d'une tôle (51) avec une tubulure (50), pour produire un dispositif collecteur d'huile conforme à l'une des revendications 1 à 7,
**caractérisé par le fait**
**qu'**une entaille est pratiquée dans une région extrême (4) de la tubulure (50),
**que** la tôle (51) est insérée dans ladite entaille,
et **que** ladite tôle (51) est reliée à ladite tubulure (50), en particulier par solidarisation matérielle et/ou par interaction mécanique et/ou par concordance de formes,
sachant notamment qu'un orifice (52), ménagé dans ladite région extrême, s'ouvre en forme d'entonnoir en direction de ladite tôle (51).

9. Procédé de liaison d'une tôle (2, 46) avec une tubulure (1), pour produire un dispositif collecteur d'huile conforme à l'une des revendications 1 à 7,
**caractérisé par le fait que**,
i. dans une région extrême de la tubulure (1),
i.1. une première entaille est pratiquée dans un premier plan, orienté transversalement par rapport à l'axe de la région extrême (4, 52) de ladite tubulure (1), ladite entaille incisant ladite tubulure (1) jusqu'à une sécante,
i.2. une deuxième entaille est pratiquée dans un deuxième plan, orienté transversalement par rapport à l'axe de ladite région extrême (4, 52) de ladite tubulure (1), ladite entaille incisant ladite tubulure (1) jusqu'à une sécante,
i.3. une troisième entaille (20) est pratiquée dans un troisième plan, orienté transversalement par rapport audit premier plan et audit deuxième plan, ladite entaille débutant à l'extrémité de ladite tubulure (1), et coupant ladite première entaille et ladite deuxième entaille en formant ainsi dans la paroi de ladite tubulure, dans la région extrême, deux languettes (3) respectivement délimitées par les trois entailles,
ii. lesdites languettes (3) sont cintrées vers le haut dans la direction périphérique,
iii. ladite tôle (2, 46) est insérée dans la troisième entaille,
iv. une zone partielle de ladite région extrême (4, 52) est déformée, en particulier écrasée en vue de relier ladite tôle (2, 46) à ladite tubulure.

10. Procédé selon la revendication 8 ou 9,
**caractérisé par le fait**
**que** la zone partielle de la région extrême (4, 52) est reliée à la tôle (2, 46, 51) par solidarisation matérielle.

11. Boîte de vitesses (35)
comprenant un carter (31), une roue dentée (33, 49) et un dispositif collecteur d'huile conforme à l'une des revendications 1 à 7,
**caractérisée par le fait**
**que** ledit dispositif collecteur d'huile comporte une surface collectrice (6, 55), conçue pour recevoir de l'huile lubrifiante projetée par ladite roue dentée (33, 49),
laquelle surface collectrice (6, 55) s'étend partiellement en arc de cercle autour de ladite roue dentée (33, 49) ;
**que** ladite surface collectrice (6, 55) est fixée dans une tubulure de canalisation (1, 40, 50),
de l'huile lubrifiante pouvant alors être introduite dans ladite tubulure de canalisation (1, 40, 50), à partir de ladite surface collectrice (6, 55) ;
et **que** ladite tubulure de canalisation (1, 40, 50) est fixée dans un alésage (30, 48) du carter (31) de la boîte de vitesses,
de l'huile lubrifiante pouvant alors être guidée par ladite tubulure de canalisation (1, 40, 50), en empruntant ledit alésage (30, 48), en vue d'alimenter un palier (45).

12. Boîte de vitesses (35)
comprenant un carter (31), une roue dentée (33, 49) et un dispositif collecteur d'huile conforme à l'une des revendications 1 à 7,
**caractérisée par le fait**
**que** ledit dispositif collecteur d'huile comprend une tôle collectrice (2, 46, 51) et une première tubulure de canalisation (1, 40, 50),
ladite tôle collectrice (2, 46, 51) étant munie d'une surface collectrice (6, 55) agencée transversalement par rapport à la direction périphérique de la roue dentée (33, 49),
une première extrémité de ladite tôle collectrice (2, 46, 51) s'engageant et, en particulier, pénétrant dans une première extrémité de ladite première tubulure de canalisation (1, 40, 50),
et une seconde extrémité de ladite première tubulure de canalisation (1, 40, 50) étant fixée au carter (31).

13. Boîte de vitesses (35) selon la revendication 11 ou 12,
**caractérisée par**
la présence d'une seconde tubulure de canalisation (1, 40, 50), sachant que la tôle collectrice (2, 46) est retenue par la première tubulure de canalisation (1, 40, 50) et par ladite seconde tubulure de canalisation (1, 40, 50) ;
et/ou que la partie formant carter (31) présente un alésage (30, 48) dans lequel la seconde extrémité de ladite première tubulure de canalisation (1, 40, 50) est insérée ;
et/ou que ladite première tubulure de canalisation (1, 40, 50) est retenue dans ledit alésage (30, 48) ;
et/ou que ladite seconde extrémité de ladite première tubulure de canalisation (1, 40, 50) est intégrée par laminage dans ledit alésage (30, 48) ;
et/ou par la présence d'un palier (45) dévolu, en particulier, au montage d'un arbre (34) portant la roue dentée (33, 49), ledit palier (45) pouvant, par l'intermédiaire dudit alésage (30, 48), être alimenté en huile lubrifiante et, notamment, par de l'huile projetée par ladite roue dentée (33, 49) et recueillie par ladite tôle collectrice (2, 46, 51) ;
et/ou que ledit alésage (30, 48) s'étend, au moins partiellement, dans une direction radiale dudit palier (45).

14. Boîte de vitesses (35) selon l'une des revendications 11 à 13,
**caractérisée par le fait**
**que** l'alésage (30, 42, 48) s'étend, au moins en partie, parallèlement à la direction axiale du palier (45),
un couvercle (32, 43) de ladite boîte de vitesses obturant ledit palier (45) et étant pourvu de moyens (44) conçus pour alimenter ledit palier (45) en huile lubrifiante, à partir dudit alésage (30, 42, 48).

15. Boîte de vitesses (35) selon l'une des revendications 11 à 14,
**caractérisée par le fait**
**que** l'orifice de la tubulure de canalisation (1, 40, 50) du dispositif collecteur d'huile est orienté en sens inverse de la direction de la gravité, dans le type de réalisation de ladite boîte de vitesses (35), l'arête inférieure (7) de la tôle collectrice (2, 46, 51) étant agencée à peu près parallèlement à l'axe de la roue dentée.
